# EUROPÄISCHE PATENTANMELDUNG

(11) **EP 0 866 635 A2**
(43) Veröffentlichungstag der Anmeldung: **23.09.1998**
(21) Anmeldenummer: 98440049.9
(22) Anmeldetag: 13.03.1998
(51) Int. Cl.: H04Q 11/04

(54) **Netzabschlusseinrichtung**

(30) Priorität: 21.03.1997 DE 19711767
(71) Anmelder: ALCATEL ALSTHOM COMPAGNIE GENERALE D'ELECTRICITE, 75008 Paris (FR)
(72) Erfinder: Wolf, Michael Joachim, Dr., 74395 Mundelsheim (DE); Brunner, Helmut, 71229 Leonberg (DE)
(74) Vertreter: Schätzle, Albin, Dipl.-Phys.

(57) **Zusammenfassung**

Netzabschlußeinrichtungen werden einem Kunden von einem Netzbetreiber eines digitalen Nachrichtenübertragungsnetzes zur Verfügung gestellt und installiert. Der Kunde ist für die Stromversorgung der Netzabschlußeinrichtung verantwortllich.

Eine Netzabschlußeinrichtung (NT) eines digitalen Nachrichtenübertragungsnetzes sendet im Falle eines Stromausfalles eine Fehlermeldung (FM) an den Kunden, der für die Behebung des Stromausfalles zuständig ist. Die Fehlermeldung (FM) wird in der Nutzinformation der digitalen Nachrichtensignale versendet. Die Netzabschlußeinrichtung (NT) verfügt über eine Stromversorgungseinrichtung (USV), die im Falle des Stromausfalles noch für eine bestimmte Zeitspanne Stromreserven abgeben kann, um Zeit zum Melden des aufgetretenen Fehlers zu schaffen. Als Fehlermeldung (FM) kann die Nutzinformation mit einem vorgegebenen Bitmuster (BM) überschrieben werden.

## Beschreibung

Die Erfindung betrifft eine Netzabschlußeinrichtung für ein digitales Nachrichtenübertragungsnetz.

Solche Netzabschlußeinrichtungen werden in verschiedenen digitalen Nachrichtenübertragungsnetzen an der Teilnehmerschnittstelle benötigt. So gibt es Netzabschlußeinrichtungen für ISDN Basisanschlüsse und für Primärmultiplexanschlüsse (2 MBit). Aber auch in digitalen Nachrichtenübertragungsnetzen auf Basis von ATM (Asynchronous Transfer Mode) oder anderen Übertragungsverfahren werden Netzabschlußeinrichtungen eingesetzt.

Ein Artikel von W. Harderich ("ISDN-Produkte für Europa", telekom praxis 3/94, S. 29-35) beschreibt, daß eine Netzabschlußeinrichtung für ISDN einem Teilnehmer von einem Netzbetreiber zur Verfügung gestellt und eingerichtet wird. Andererseits befindet sich die Netzabschlußeinrichtung aber auf dem Gelände des Teilnehmers und wird von diesem mit Strom versorgt.

Ein Problem, das mit dieser Konstellation verbunden ist, tritt auf, wenn durch einen Stromausfall beim Teinehmer die Stromversorgung der Netzabschlußeinrichtung unterbrochen ist. Der Teilnehmer erkennt an einem Endgerät nur, daß eine Störung im Nachrichtenübertragungsnetz vorliegt, kann jedoch den Fehler nicht lokalisieren und wird nicht realisieren, daß die Fehlerbehebung in seinen Zuständigkeitsbereich fällt.

Das selbe Problem tritt vor allem auch bei Mietleitungen (leased lines) auf, mit denen ein Kunde verschiedene seiner Teil netze über ein öffentliches Netz verbindet. Auch hier sind auf dem Gelände des Kunden Netzabschlußeinrichtungen des öffentlichen Netzbetreibers installiert, die von dem Kunden mit Strom versorgt werden und der Kunde hat keine Möglichkeit, einen Ausfall der Stromversorgung der Netzabschlußeinrichtungen zu erkennen. Zwar ist für 2 MBit PCM-Verbindungen (pulse code modulation) in dem Rahmen der Nachrichtensignale ein Fehlermeldebit (Sₐ-Bit) definiert, welches im Falle eines Stromausfall der Netzabschlußeinrichtungen gesetzt wird, um den Fehler zu melden, doch kann dieses Fehlermeldebit nur zum öffentlichen Netzbetreiber, nicht jedoch zum Kunden übertragen werden.

Aufgabe der Erfindung ist es daher, eine Netzabschlußeinrichtung anzugeben, welche im Falle eines Stromausfalles eine Fehlererkennung durch einen für die Stromversorgung verantwortlichen Kunden ermöglicht. Eine weitere Aufgabe der Erfindung ist es, ein Verfahren zum Melden eines Stromausfalles an einer Netzabschlußeinrichtung anzugeben.

Die Erfindung wird bezüglich der Netzabschlußeinrichtung gelöst durch die Merkmale des Patentanspruchs 1 und bezüglich des Verfahrens durch die Merkmale des Patentanspruchs 7. Vorteilhafte Ausgestaltungen sind den abhängigen Ansprüchen zu entnehmen.

Ein Vorteil der Erfindung besteht darin, daß sie eine Fehlermeldung aufgrund eines Stromausfalles für ein Managementsystem des Kunden verfügbar macht. Sie eignet sich daher insbesondere auch für Mietleitungen, über die ein Fehlermeldebit nicht von einem Ende zum anderen übertragen werden kann.

Die Erfindung kann vor allem auch dort vorteilhaft eingesetzt werden, wo der Einspeisepunkt zu einem digitale Nachrichtenübertragungsnetz sich nicht im selben Raum oder im selben Gebäude befindet wie die weitere Signalbearbeitung durch den Kunden und ein Stromausfall nicht mehr dadurch erkannt werden kann, daß andere Übertragungsgeräte wegen Stromausfalles ebenfalls versagen.

Im folgenden wird die Erfindung anhand der Figuren 1 bis 4 in zwei Ausführungsbeispielen beschrieben. Es zeigen:
- Figur 1: einen Teilnehmeranschluß mit Netzabschlußeinrichtung eines digitalen Nachrichtennetzes,
- Figur 2: ein Blockschaltbild der Netzabschlußeinrichtung,
- Figur 3: zwei über eine Mietleitung verbundene Teil netze eines Kunden und
- Figur 4: ein Flußdiagramm des Verfahrens.

Eine Grundidee der Erfindung ist es, im Falle eines Stromausfalles an einer Netzabschlußeinrichtung eines digitalen Nachrichtenübertragungsnetzes eine Fehlermeldung an den Teilnehmer oder Kunden.zu senden, der für die Behebung des Stromausfalles zuständig ist. Dabei besteht ein Aspekt der Erfindung darin, die Fehlermeldung in der Nutzinformation der digitalen Nachrichtensignale zu versenden. Ein weiterer Aspekt der Erfindung besteht darin, die Netzabschlußeinrichtung mit einer Stromversorgungseinrichtung auszustatten, die im Falle eines Stromausfalles noch für eine vorbestimmte Zeitspanne Stromreserven abgeben kann, um Zeit zum Melden des aufgetretenen Fehlers zu schaffen.

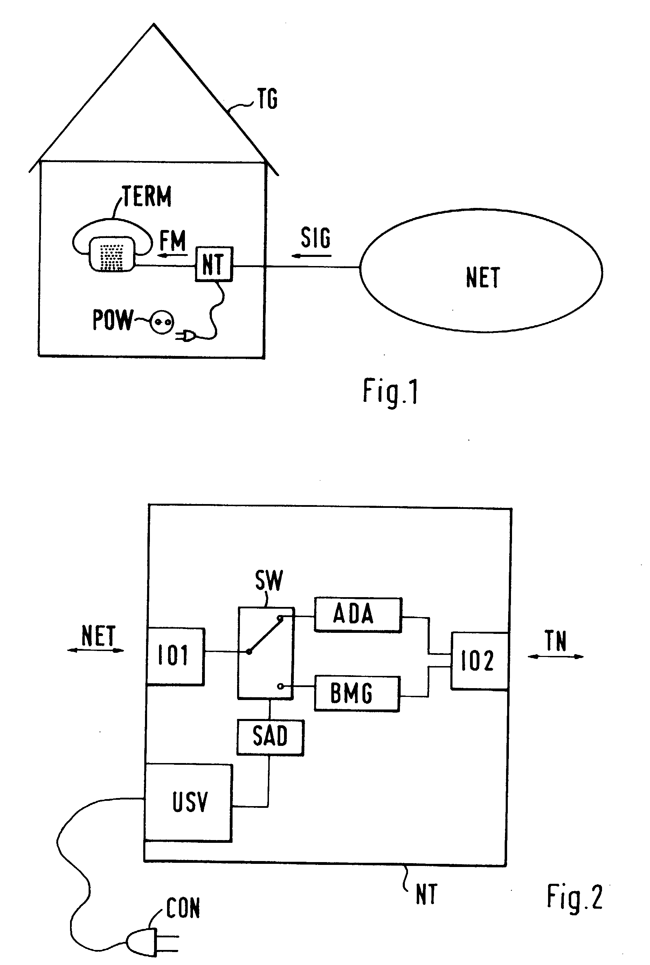

In einem ersten in Figur 1 gezeigten Ausführungsbeispiel ist an ein digitales Nachrichtenübertragungsnetz NET ein Endgerät TERM eines Teilnehmers angeschlossen. Zwischen Endgerät TERM und Nachrichtenübertragungsnetz NET ist eine Netzabschlußeinrichtung NT geschaltet, die dem Betreiber des Nachrichtenübertragungsnetzes NET gehört, und von diesem auf dem Gelände TG des Teilnehmers installiert wurde. Es liegt daher in der Verantwortlichkeit des Teilnehmers, die Netzabschlußeinrichtung NT mit einer Stromquelle POW zu verbinden, und so für eine Stromversorgung der Netzabschlußeinrichtung NT zu sorgen.

Im ersten Ausführungsbeispiel ist der Netzstecker einer in der Netzabschlußeinrichtung enthaltenen Stromversorgungseinrichtung aus einer Wandsteckdose der externen Stromquelle POW herausgezogen. An der Netzabschlußeinrichtung NT tritt daher ein Stromausfall auf. Nach Auftreten des Stromausfalles hat die Stromversorgungseinrichtung der Netzabschlußeinrichtung NT noch für eine gewisse Zeitspanne Stromreserven und hält damit die Stromversorgung der Netzabschlußeinrichtung aufrecht. In dieser Zeitspanne sendet die Netzabschlußeinrichtung NT an ihren Ausgängen eine Fehlermeldung FM in der Nutzinformation von aus dem Nachrichtenübertragungsnetz NET empfangenen Nachrichtensignalen SIG. Das Endgerät TERM des Teilnehmers kann die Fehlermeldung FM interpretieren und zeigt daraufhin auf einem Display an, daß ein Stromausfall an der Netzabschlußeinrichtung NT vorliegt. So kann der Teilnehmer den Fehler beheben indem er die Stromversorgung wiederherstellt, während er ohne die Fehlermeldung lediglich einen Signalausfall an seinem Endgerät feststellen und den Fehler beim Netzbetreiber vermuten würde.

Die Netzabschlußeinrichtung des ersten Ausführungsbeispieles ist in Figur 2 schematisch dargestellt. Sie enthält je eine Anschlußeinheit IO1, IO2 für den Teilnehmeranschluß TN und für den Anschluß an das Nachrichtenübertragungsnetz NET. Im fehlerfreien Betrieb sind die beiden Anschlußeinheiten IO1, IO2 über eine Schnittstellenanpassungsvorrichtung ADA miteinander verbunden. Sie sorgt für eine Anpassung des Teilnehmeranschlusses TN an die Schnittstelle zum Nachrichtenübertragungsnetz NET. Es handelt sich im ersten Ausführungsbeispiel um eine Netzabschlußeinrichtung für einen lSDN-Anschluß und die Schnittstellenanpassungsvorrichtung ADA sorgt für eine Umsetzung der zweiadrigen U_{K0} Schnittstelle an die vieradrige S₀ Schnittstelle.

Weiter enthält die Netzabschlußeinrichtung NT eine Stromversorgungseinrichtung USV, die in der Lage ist, die Stromversorgung der Netzabschlußeinrichtung NT im Falle eines Stromausfalles für eine vorgegebene Zeitspanne aufrechtzuerhalten. Sie ist über einen Netzstecker CON an eine externe Stromquelle anschließbar. Bei der Stromversorgungseinrichtung USV kann es sich um eine unterbrechungsfreie Stromversorgung handeln, wie sie beispielsweise auch für LAN-Server (LAN: local area network) eingesetzt wird. Eine solche unterbrechungsfreie Stromversorgung ist in der Lage, die Stromversorgung im Falle eines Stromausfalles für einige Minuten aufrecht zu erhalten. Es reicht aber auch aus, eine Stromversorgungseinrichtung mit parallelgeschalteter Kapazität zu verwenden, welche bei einem Stromausfall für einige hundert Millisekunden (z.B. 200 ms) Stromreserven hat.

Mit der Stromversorgungseinrichtung USV ist eine Schaltung SAD zur Stromausfalldetektion angeschlossen, die einen Stromausfall erkennt und daraufhin einen Schalter SW ansteuert. Der Schalter SW schaltet dann die Anschlußeinheiten IO1, IO2 auf einen Bitmustergenerator BMG um, der die Nutzinformation von empfangenen Nachrichtensignalen mit einem vorgegebenen Bitmuster überschreibt. Das Bitmuster wird, solange die Stromreserven der Stromversorgungseinrichtung ausreichen, an den beiden Anschlußeinheiten IO1, IO2 gesendet, um den aufgetretenen Fehler zu melden.

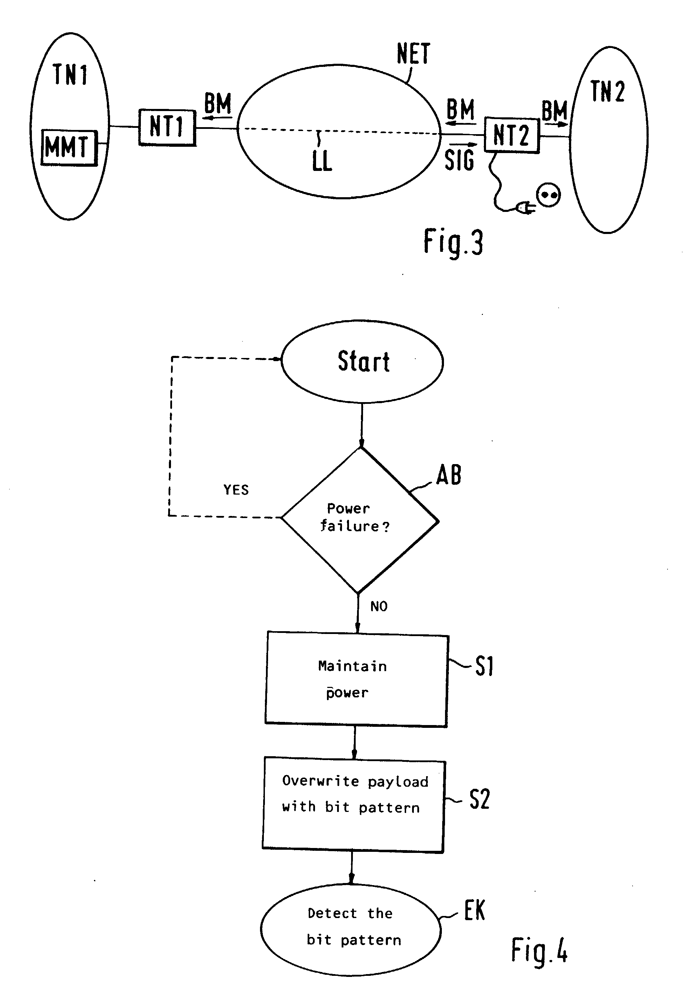

Ein zweites Ausführungsbeispiel ist die in Figur 3 dargestellte Konfiguration, bei der zwei Teilnetze TN1, TN2 eines Kunden über eine Mietleitung LL (leased line) eines Netzbetreibers verbunden sind. Die Mietleitung ist Teil eines digitalen Nachrichtenübertragungsnetzes NET. Zwischen das Nachrichtenübertragungsnetz NET und jeweils eines der Teilnetze TN1, TN2 ist eine Netzabschlußeinrichtung NT1, NT2 geschaltet, die wie im ersten Ausführungsbeispiel vom Gelände des Kunden mit Strom versorgt wird.

Tritt nun, wie in der Figur 3 gezeigt, ein Stromausfall an der zweiten Netzabschlußeinrichtung NT2 auf, so überschreibt diese für eine Zeitspanne von 200 ms die Nutzinformation des Nachrichtensignales SIG mit einem bestimmten Bitmuster BM. Es werden sowohl die aus dem Nachrichtenübertragungsnetz NET empfangenen Nachrichtensignale wie auch die in Richtung des Nachrichtenübertragungsnetzes NET gesendeten Nachrichtensignale mit dem Bitmuster BM überschrieben. Dadurch wird der Kunde sowohl in dem ersten wie auch in dem zweiten Teilnetz TN1, TN2 von dem aufgetretenen Fehler informiert.

Dies ist von besonderem Vorteil, wenn der Kunde wie in der Figur 3 gezeigt in dem ersten Teilnetz TN1 ein für alle Teilnetze verantwortliches Managementsystem MMT betreibt, von dem der Fehler registriert werden muß. Das für 200 ms von der betroffenen Netzabschlußeinrichtung NT2 gesendete Bitmuster BM erreicht über die Mietleitung LL das Teilnetz TN1 und kann dort von dem Managementsystem MMT ausgewertet werden. Dies könnte durch Fehlermeldebits im Rahmen der Nachrichtensignale nicht geleistet werden, da die Rahmen im Nachrichtenübertragungsnetz NET verändert werden und Fehlermeldebits daher das Managementsystem MMT im ersten Teilnetz TN1 des Kunden nicht erreichen.

Eine vorteilhafte Weiterbildung der Erfindung besteht darin, daß das Bitmuster BM einen eindeutigen Rückschluß auf die Netzabschlußeinrichtung NT2 zuläßt, bei der der Fehler aufgetreten ist. Der Kunde erhält dadurch sofort die Information, wo der Stromausfall aufgetreten und zu beheben ist. Insbesondere wenn er mehrere über Mietleitungen verbundene Teil netze mit mehreren Netzabschlußeinrichtungen NT1, NT2 betreibt, die in großer räumlicher Entfernung voneinander beispielsweise in unterschiedlichen Städten installiert sind, ist dies von Vorteil. Diese eindeutige Rückschlußmöglichkeit kann dadurch realisiert werden, daß alle Netzabschlußgeräte NT1, NT2 mit jeweils einer ldentifizierungsnummer (z.B. einer Seriennummer) ausgestattet werden und die jeweilige Nummer als Teil der Fehlermeldung oder des Bitmusters gesendet werden.

Anstelle die ganze Nutzinformation mit einem vorgegebenen Bitmuster BM zu überschreiben, kann der Nutzinformation auch eine Fehlermeldung FM angehängt oder eingeschoben werden. Dies ist dann möglich, wenn von dem Teilnehmer oder Kunden die Übertragungskapazität nicht vollständig ausgenutzt wird, oder wenn es sich um ein Nachrichtenübertragungsnetz mit flexibler Übertragungsrate handelt (wie beispielsweise ATM). Eine Auswertung der Fehlermeldung könnte auch in einem PCM-Multiplexer für Primärmultiplexeranschlüsse oder in einer Telekommunikationsanlage erfolgen.

Das Verfahren zum Melden eines Stromausfalles läuft wie in Figur 4 gezeigt nach folgenden Schritten ab:
- Zunächst wird durch eine Abfrage AB ermittelt, ob ein Stromausfall an einer Netzabschlußeinrichtung vorliegt. Liegt kein Stromausfall vor, so kann das Verfahren nach einer eventuellen Wartezeit erneut gestartet werden.
- Liegt ein Stromausfall vor, so wird in einem ersten Schritt S1 für die Aufrechterhaltung der Stromversorgung gesorgt. Das geschieht in dem ersten Ausführungsbeispiel durch die unterbrechungsfreie Stromversorgung.
- In einem zweiten Schritt S2 wird dann in der Nutzinformation von an der betroffenen Netzabschlußeinrichtung empfangenen Nachrichtensignalen eine Fehlermeldung gesendet. Dazu kann z.B. die Nutzinformation mit einem vorgegebenen Bitmuster überschrieben werden.
- Mit der Detektion EK der Fehlermeldung endet das Verfahren; der aufgetretene Fehler ist gemeldet. Die Detektion kann beispielsweise in einem Managementsystem des Kunden stattfinden, welches dann eine entsprechende Fehlermeldung anzeigt oder einen Alarm auslöst.

Die Wahrscheinlichkeit für eine falsche Fehlermeldung oder einen falschen Alarm durch eine zufällige Übereinstimmung gesendeter Daten mit dem vorbestimmten Bitmuster kann dadurch ausgeschlossen werden, daß eine Fehlermeldung erst nach Ausfall der Netzabschlußeinrichtung und dem damit verbundenen Signalverlust ausgelöst wird.

## Patentansprüche

1. Netzabschlußeinrichtung (NT) für ein Nachrichtenübertragungsnetz (NET), die eine an eine externe Stromquelle (POW) anschließbare Stromversorgungseinrichtung (USV) enthält,
**gekennzeichnet durch**
- Mittel (SAD) zum Erkennen eines Stromausfalles der externen Stromquelle (POW),
- Mittel (USV) zum Aufrechterhalten der Stromversorgung für eine vorbestimmte Zeitspanne im Falle eines Stromausfalles und
- Mittel (BMG) zum Senden einer Fehlermeldung (FM) in der Nutzinformation eines Nachrichtensignales (SIG).

2. Netzabschlußeinrichtung (NT) gemäß Anspruch 1, bei dem das Mittel (BMG) zum Senden der Fehlermeldung ein Bitmustergenerator zum Überschreiben der Nutzinformation mit einem vorgegebenen Bitmuster (BM) ist.

3. Netzabschlußeinrichtung (NT) gemäß Anspruch 1, die anhand der Fehlermeldung eindeutig identifizierbar ist.

4. Netzabschlußeinrichtung (NT) gemäß Anspruch 1, die für den Einsatz für Mietleitungen ausgelegt ist.

5. Netzabschlußeinrichtung (NT) gemäß Anspruch 1, bei der die Mittel zum Aufrechterhalten der Stromversorgung Stromreserven für mindestens 200 ms enthalten.

6. Netzabschlußeinrichtung (NT) gemäß Anspruch 1, bei der das Mittel zum Aufrechterhalten der Stromversorgung eine unterbrechungsfreie Stromversorgung (USV) ist.

7. Verfahren zum Melden eines Stromausfalles an einer Netzabschlußeinrichtung (NT) eines Nachrichtenübertragungsnetzes (NET) mit den Schritten:
- Erkennen des Stromausfalles an der Netzabschlußeinrichtung (NT),
- Aufrechterhalten der Stromversorgung der Netzabschlußeinrichtung (NT) für eine vorbestimmte Zeitspanne,
- Senden einer Fehlermeldung (FM) in der Nutzinformation eines Nachrichtensignales (SIG) und
- Detektieren der Fehlermeldung (FM).

8. Verfahren nach Anspruch 7, bei dem eine Fehlermeldung angezeigt oder ein Alarm ausgelöst wird, nachdem ein Signalverlust festgestellt wird.
